# DEMANDE DE BREVET EUROPEEN

(11) **EP 4 207 564 A1**
(43) Date de publication de la demande: **05.07.2023**
(21) Numéro de dépôt: 22216999.7
(22) Date de dépôt: 28.12.2022
(51) Int. Cl.: H02K 7/18, H02K 21/12, H02K 35/02, H02K 21/24, H02K 21/14, H02K 1/14, H02K 1/2726

(54) **RÉCUPERATEUR D'ENERGIE A LARGE GAMME DE VITESSE DE FONCTIONNEMENT**

(30) Priorité: 30.12.2021 FR 2114675
(71) Demandeur: COMMISSARIAT A L'ENERGIE ATOMIQUE ET AUX ENERGIES ALTERNATIVES, 75015 Paris (FR)
(72) Inventeur: GARRAUD, Nicolas, 38054 GRENOBLE CEDEX 09 (FR); BOISSEAU, Sébastien, 38054 GRENOBLE CEDEX 09 (FR); DESPESSE, Ghislain, 38054 GRENOBLE CEDEX 09 (FR); ALESSANDRI, Baptiste, 38054 GRENOBLE CEDEX 09 (FR)
(74) Mandataire: Brevalex

(57) **Abrégé**

L'invention concerne un dispositif de récupération d'énergie comportant :
a) - des premiers moyens magnétiques (2), ou moyens d'entrainement, aptes à être mis en mouvement selon un mouvement de rotation ou de translation ;
b) - un aimant principal (6), apte à être mis en rotation autour d'un axe (ZZ') par les premiers moyens magnétiques (2);
c) - des deuxièmes moyens magnétiques (8, 8'), disposés de manière fixe par rapport à l'aimant principal (6), pour déterminer une ou plusieurs position(s) d'équilibre de ce dernier;
d) - au moins une bobine conductrice (10) pour transformer une variation d'orientation de l'aimant principal (6) en énergie électrique, dans une 1^{re} gamme de vitesses ou de fréquences des premiers moyens magnétiques, dites basses vitesses ou basses fréquences et dans une 2^{ème} gamme de vitesses ou de fréquences de rotation des premiers moyens magnétiques, dites vitesses moyennes ou fréquences moyennes.

## Description

### DOMAINE TECHNIQUE ET ART ANTERIEUR

La présente invention concerne un système de récupération d'énergie électromagnétique apte à convertir en énergie électrique un mouvement de rotation ou de translation d'un élément mobile par rapport à un élément fixe.

Un avantage de ce système est sa capacité à convertir ce mouvement efficacement sur une large gamme de vitesses de rotation (typiquement de 1 tour/jour à 10000 tours/s, ou de déplacement de l'élément mobile. L'énergie électrique dans laquelle le mouvement est converti peut par exemple être ensuite utilisée pour transmettre une information à distance à l'aide d'un microcontrôleur et d'une puce RF.

Ce dispositif peut être mis en oeuvre dans tout système présentant des gammes de vitesses de rotation ou de déplacement importantes, par exemple des interrupteurs-variateurs, des poignées, des arbres tournants, des turbines, des machines industrielles, des robots, des machines agricoles, ...

Il existe peu de systèmes connus de récupération d'énergie capables de fonctionner sur plusieurs gammes de vitesses de rotation ou de déplacement.

On connaît le dispositif décrit dans EP 3488517 pour un interrupteur autonome. Un aimant principal du dispositif décrit dans ce document est actionné par des aimants actionneurs qui sont disposés dans des glissières latérales et qui suivent un mouvement de translation. Le mouvement et la vitesse de ces aimants actionneurs sont donc limités.

Il se pose le problème de trouver un dispositif permettant de récupérer de l'énergie à partir d'un mouvement de rotation ou de translation d'un élément mobile.

De préférence, cette récupération d'énergie est possible pour des gammes de vitesses assez larges de l'élément mobile.

### EXPOSÉ DE L'INVENTION

L'invention concerne d'abord un dispositif de récupération ou de transformation d'énergie comportant :
a) - des premiers moyens magnétiques ou, des moyens magnétiques d'entrainement, aptes à, ou configurés pour, être mis en mouvement selon un mouvement de rotation ou de translation ; ces premiers moyens magnétiques comportent de préférence un aimant permanent ;
b) - un aimant principal, apte à être mis en rotation autour d'un axe par les premiers moyens magnétiques;
c) - des deuxièmes moyens magnétiques, disposés de manière fixe par rapport à l'aimant principal, pour déterminer une ou plusieurs position(s) d'équilibre de ce dernier ;
d) - des moyens, comportant par exemple au moins une bobine conductrice, pour transformer une variation de flux due au mouvement de l'aimant principal ou des premiers moyens magnétiques en énergie électrique.

Par exemple les premiers moyens magnétiques sont configurés pour ou aptes à:
- dans une 1^{re} gamme de vitesses ou de fréquences des premiers moyens magnétiques, dites basses vitesses ou basses fréquences, par exemple inférieure à 120 tr/mn ou à 500 tr/mn, le couplage des moyens d'entraînement et de l'aimant principal entraîne la rotation de ce dernier à partir d'au moins une position d'équilibre, les oscillations de celui-ci autour de ladite au moins une position d'équilibre résultant en la création d'une énergie électrique ;
- et, dans une 2^{ème} gamme de vitesses ou de fréquences des premiers moyens magnétiques, dites vitesses moyennes ou fréquences moyennes, par exemple comprise entre 100 tr/mn ou 120 tr/mn ou 500 tr/mn et 5000 tr/mn ou 7000 tr/mn ou même 10000 tr/mn, le couplage des moyens d'entraînement et de l'aimant principal entraîne la rotation de ce dernier, sans oscillations, cette rotation ayant pour conséquence la création de l'énergie électrique.

L'invention concerne également un procédé de récupération d'énergie, pouvant par exemple mettre en oeuvre un dispositif selon l'invention, tel que décrit ci-dessus et/ou dans le cadre de la présente demande.

L'invention concerne également un tel procédé de récupération d'énergie comportant :
a) - une mise en mouvement de premiers moyens magnétiques, ou moyens d'entrainement, selon un mouvement de rotation ou de translation, à une première vitesse ou fréquence ou à une vitesse ou fréquence dans une 1^{re} gamme ou plage de vitesses ou des fréquences ;
b) - une mise en rotation d'un aimant principal autour d'un axe (ZZ') par les premiers moyens magnétiques, à partir d'au moins une position d'équilibre de l'aimant principal, définie par des deuxièmes moyens magnétiques, disposés de manière fixe par rapport à celui-ci;
c) - la transformation d'une variation de flux magnétique, due par exemple à une variation d'orientation de l'aimant principal, en énergie électrique par au moins une bobine conductrice.

Dans un tel procédé ou dispositif, l'aimant principal peut osciller autour d'une ou plusieurs positions d'équilibre, et la variation d'orientation due à ces oscillations peut être convertie en énergie électrique par ladite bobine conductrice.

C'est par exemple le cas lorsque les premiers moyens magnétiques sont entraînés en rotation à une vitesse faible, par exemple inférieure à 120 tr/mn ou à 500 tr/mn.

Un deuxième régime de fonctionnement peut être établi lorsque les premiers moyens magnétiques sont entraînés en rotation à une deuxième vitesse ou fréquence ou à une vitesse ou fréquence dans une 2ème gamme ou plage de vitesses ou des fréquences, par exemple comprise entre 100 tr/mn ou 120 tr/mn ou 500 tr/mn et 5000 tr/mn ou 7000 tr/mn ou même 10000 tr/mn. Dans ce deuxième régime, l'aimant principal n'oscille plus forcément autour de ses positions d'équilibre et suit les premiers moyens magnétiques de manière synchrone.

En d'autres termes :
- dans une 1^{re} gamme de vitesses ou de fréquences de rotation, par exemple inférieure à 120 tr/mn ou à 500 tr/mn, des premiers moyens magnétiques, dites basses vitesses ou basses fréquences, le couplage des moyens d'entraînement et de l'aimant principal entraîne la rotation de ce dernier à partir de ladite au moins une position d'équilibre, les oscillations de celui-ci autour de ladite au moins une position d'équilibre résultant en la création d'une énergie électrique dans ladite au moins une bobine conductrice (10, 40);
- et, dans une 2^{ème} gamme de vitesses ou de fréquences de rotation des premiers moyens magnétiques, par exemple comprise entre 100 tr/mn ou 120 tr/mn ou 500 tr/mn et 5000 tr/mn ou 7000 tr/mn ou même 10000 tr/mn, dites vitesses moyennes ou fréquences moyennes, le couplage des moyens d'entraînement et de l'aimant principal entraîne la rotation de ce dernier, sans oscillations, cette rotation ayant pour conséquence la création de l'énergie électrique dans ladite au moins une bobine conductrice.

Un procédé de récupération d'énergie selon l'invention peut comporter en outre :
- une étape de mise en mouvement de premiers moyens magnétiques, ou moyens d'entrainement, à une troisième vitesse ou fréquence, ou à une vitesse ou fréquence dans une 3ème gamme ou plage de vitesses ou des fréquences, pour laquelle l'aimant principal n'est pas mis en rotation ;
- la transformation de ce mouvement des premiers moyens magnétiques en énergie électrique par au moins une bobine conductrice.

Ce régime peut être par exemple mis en oeuvre lorsque les premiers moyens magnétiques sont entraînés en rotation à une vitesse supérieure à 5000 tr/mn ou à 10000 tr/mn.

Un dispositif ou un procédé de récupération d'énergie selon l'invention peut être appliqué à un élément mobile, l'invention permettant de convertir en énergie électrique un mouvement de rotation ou de translation de cet élément mobile par rapport à un élément fixe. Les premiers moyens magnétiques, qui sont des moyens d'entraînement de l'aimant principal, sont liés à cet élément mobile.

Dans un dispositif ou un procédé selon l'invention, les premiers moyens magnétiques d'entrainement peuvent être mobiles :
- en rotation autour d'un l'axe, par exemple autour de l'axe (ZZ') de rotation de l'aimant principal ;
- ou en translation, par exemple entièrement ou au moins en partie selon une direction, ou dans un plan, perpendiculaire à l'axe ZZ' de rotation de l'aimant principal et/ou les premiers moyens magnétiques d'entrainement étant polarisés selon l'axe ZZ' et étant mobiles en translation suivant l'axe ZZ'; dans ce cas, selon une réalisation particulière, les premiers moyens magnétiques d'entrainement peuvent comporter une pluralité d'aimants disposés de manière linéaire avec des polarités successivement opposées ;
- ou en rotation ou en translation au moins en partie dans un plan contenant l'aimant principal.

Dans un dispositif ou un procédé selon l'invention, les deuxièmes moyens magnétiques disposés de manière fixe par rapport à l'aimant principal peuvent comporter au moins un circuit ferromagnétique, ladite ou lesdites position(s) d'équilibre étant définie(s) lorsque l'aimant principal ferme ce circuit ferromagnétique. Par exemple, un tel dispositif peut comporter au moins 2 circuits ferromagnétiques, une position d'équilibre étant définie lorsque l'aimant principal ferme chaque circuit ferromagnétique.

Quel que soit le mode de réalisation d'un dispositif ou d'un procédé selon l'invention :
- afin de récupérer l'énergie électrique, au moins une bobine conductrice peut être enroulée autour de l'aimant principal ou d'au moins une partie du circuit magnétique ;
- et/ou les moyens magnétiques pour fixer une ou plusieurs position(s) d'équilibre de l'aimant principal peuvent comporter en outre au moins un aimant fixe interagissant avec l'aimant principal ;
- et/ou au moins l'un parmi les moyens magnétiques d'entrainement et l'aimant principal peut être bipolaire ou n-polaire (n>2).

Dans un dispositif ou un procédé selon l'invention, les premiers moyens magnétiques et/ou l'aimant principal peut/peuvent présenter une symétrie de révolution autour d'un axe de symétrie, par exemple l'axe autour duquel l'aimant principal est entraîné en rotation.

Dans un dispositif ou un procédé selon l'invention, il est possible de mettre en oeuvre plusieurs bobines conductrices pour transformer une variation d'orientation de l'aimant principal en énergie électrique.

L'invention permet de réaliser un système de récupération d'énergie à large gamme de vitesses de fonctionnement. Elle permet de récupérer de l'énergie à très basses vitesses ou fréquences des premiers moyens magnétiques des moyens liés à l'élément mobile. Un dispositif mis en oeuvre dans le cadre de la présente l'invention est fortement non-linéaire avec stockage d'énergie sous forme magnétique (en particulier pour la 1^{re} plage de fréquence ou de vitesse); il peut comporter un ou plusieurs points de déclenchement et l'énergie peut être libérée sous forme d'oscillations.

Le dispositif ou le procédé selon l'invention met en oeuvre un circuit magnétique apte à collecter aussi bien une variation de flux liée au mouvement de l'aimant entraîné qu'au mouvement du/des aimants entraîneurs. Par exemple, à basse vitesse d'entrainement, l'aimant entraîné est apte à stocker de l'énergie sous forme magnétique, puis à la libérer brutalement par une mise en oscillation qui est rapide au regard de la vitesse de déplacement de l'aimant entraîneur.

### BRÈVE DESCRIPTION DES DESSINS

Des exemples de réalisation de l'invention seront maintenant décrits en référence aux dessins annexés dans lesquels :
[Fig. 1] représente une réalisation d'un dispositif selon l'invention;
[Fig. 2] représente une vue de côté de la réalisation de la figure 1;
[Fig. 3] représente une variante d'un dispositif selon l'invention, avec un circuit magnétique simple ;
[Fig. 4A] -[Fig. 4C] représentent une autre variante d'un dispositif selon l'invention, avec des moyens d'entrainement à mouvement de translation;
[Fig. 5] représente encore une autre variante d'un dispositif selon l'invention, avec des moyens magnétiques pour ajuster un point de déclenchement;
[Fig. 6] représente encore une autre variante d'un dispositif selon l'invention, avec un bobinage sur le circuit magnétique;
[Fig. 7A] - [Fig. 7B] représentent encore une autre variante d'un dispositif selon l'invention, avec un aimant multi-polaire;
[Fig. 8] illustre une réalisation selon l'invention avec un arbre tournant dont le pourtour est muni d'aimants.

Dans les figures des éléments techniques similaires ou identiques sont désignés par les mêmes numéros de référence.

### EXPOSÉ DÉTAILLÉ DE MODES DE RÉALISATION PARTICULIERS

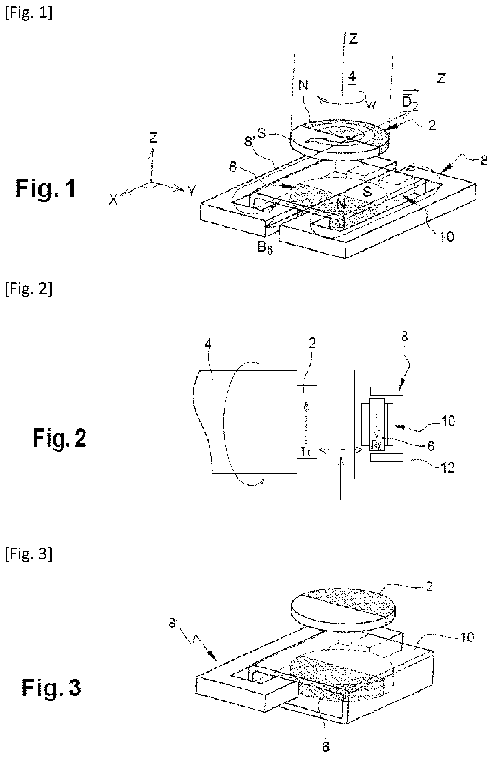

Un exemple de réalisation d'un dispositif selon l'invention est illustré en figure 1. Il comporte :
- un aimant entraîneur 2, solidaire d'un élément mobile 4 en rotation, par exemple un arbre d'une machine, qui peut tourner autour d'un axe ZZ' sensiblement perpendiculaire au plan (lui-même parallèle au plan XY) dans lequel cet aimant 2 peut être entraîné en rotation ; cet aimant 2 peut être à symétrie de révolution autour de ZZ' ou autour d'un axe qui est parallèle à ZZ', mais un aimant d'une autre forme, par exemple parallélépipédique, est également possible; la polarisation magnétique B₂ de l'aimant 2 est située dans un plan parallèle au plan XY;
- un aimant central ou principal 6, lequel s'étend dans un plan parallèle à celui de l'aimant 2 ; ce dernier, par couplage, entraine l'aimant 6 en rotation autour de l'axe ZZ'; cet aimant 6 est de préférence à symétrie de révolution autour de ZZ' ; sa polarisation B₆ est elle aussi située dans un plan parallèle au plan XY;
- 2 éléments magnétiques 8, 8', chacun sous la forme d'un circuit ferromagnétique, présentant un entrefer dans lequel s'insère l'aimant central 6; chaque élément magnétique permet de canaliser les lignes de flux magnétique de l'aimant central 6; comme on le voit en figure 1, ces deux éléments magnétiques peuvent être disposés de manière symétrique par rapport à un plan XZ ; Les éléments 8, 8' se polarisent grâce à l'aimant, et leurs aimantations peuvent se renverser facilement. Les positions d'équilibre se trouvent sur un minimum d'énergie magnétique entre l'aimant et les éléments 8, 8' ;
- une bobine 10 qui permet de convertir en énergie électrique la variation de flux magnétique induite par la rotation de l'aimant central 6; comme dans le mode de réalisation illustré en figure 1, cette bobine est de préférence disposée autour de l'aimant central 6.

La figure 2 représente une vue de côté de ce système, qui forme un récupérateur d'énergie. On a également représenté sur cette figure le boîtier 12 dans lequel est disposé l'ensemble comportant l'aimant central 6, les éléments magnétiques 8, 8' et la bobine 10. D'une manière générale, quel que soit le mode de réalisation, des moyens de maintien mécanique maintiennent l'aimant 6 dans la bobine 10 ; il est par exemple guidé sur des paliers lisses ou des roulements à bille (afin de réduire les frottements et augmenter la fréquence de décrochage). Pour le boîtier 12, on cherche à éviter un matériau ferromagnétique ; celui-ci est préférentiellement en matière non métallique (notamment pour les hautes fréquences, afin de pas induire de courants de Foucault), par exemple de type plastique ou céramique.

Dans la réalisation illustrée en figures 1 et 2, un couplage électro-dynamique s'établit entre l'aimant 2 et l'aimant 6, la rotation de l'aimant 2 entraînant celle de l'aimant 6 dans son plan. Plus exactement, le couplage entre l'aimant 2 et l'aimant 6 s'établit sous forme de couple entre ces 2 aimants. Lorsque leurs polarisations sont anti-parallèles alors le couple est nul. Lorsque l'aimant 2 tourne, l'aimant 6 va avoir tendance à tourner pour s'aligner. Si l'aimant 6 n'est par ailleurs pas libre de tourner (par exemple à cause de la présence du circuit ferromagnétique), alors une position d'équilibre qui ne respecte pas l'alignement des polarisations des aimants 2 et 6 est trouvée. Dans ce cas, il y a un stockage d'énergie sous forme magnétique. Notons également que le couplage augmente lorsque la distance entre les aimants diminue, ou lorsque la dimension des aimants augmente ; avantageusement, la distance entre les deux aimants est inférieure à 3 fois la longueur des aimants, et est de préférence inférieure à 1 fois la longueur des aimants. Par ailleurs, l'aimant 6 a 2 positions d'équilibres stables, déterminées par la fermeture des 2 circuits constitués par les deux éléments magnétiques 8, 8'. La rotation de l'aimant 2 va donc en général (sauf pour les très hautes vitesses, comme expliqué ci-dessous) entraîner l'aimant 6 à passer d'une position d'équilibre stable (cette position est celle représentée en figure 2), à une autre position d'équilibre stable, etc.

Un système de récupération d'énergie tel que celui des figures 1 et 2 peut présenter 3 modes de fonctionnement dépendant de la vitesse de rotation de l'aimant entraîneur 2:
- pour une 1^{ère} gamme de vitesses, dites basses vitesses, le couplage des aimants 2 et 6 entraîne la rotation de ce dernier d'une position d'équilibre à l'autre ; les oscillations de l'aimant central 6 autour de chacune de ces positions d'équilibre résultent en la création d'une énergie électrique dans la bobine 10 ;
- pour une 2^{ème} gamme de vitesses, dites vitesses moyennes, le couplage des aimants 2 et 6 entraîne encore la rotation de ce dernier et cette rotation a pour conséquence la création d'une énergie électrique dans la bobine 10 (l'aimant 6 n'a pas le temps d'entrer en oscillation);
- pour une 3^{ème} gamme de vitesses, dite gamme supérieure, l'aimant 6 ne tourne plus, l'aimant entraîneur 2 interagit directement avec le circuit 8 et les variations de champ magnétique induites dans ce dernier sont converties en puissance électrique par la bobine 10.

Pour ces différents cas, l'énergie électrique pourra être stockée, par exemple dans des moyens de stockage tels qu'une ou plusieurs batterie(s) ou un ou plusieurs condensateur(s) ou un ou plusieurs super condensateur(s) et/ou utilisée pour alimenter tout système électrique, par exemple pour faire une mesure, la traiter et la transmettre à distance à l'aide d'un microcontrôleur et d'une puce RF.

Des détails de ces 3 modes de fonctionnement sont donnés ci-dessous.

Les limites des 3 gammes de vitesse ci-dessus vont dépendre du dimensionnement de l'aimant principal 6 et du couplage entre les deux aimants 2, 6.

Selon un exemple:
- un régime de fonctionnement à basse vitesse s'établit pour une vitesse de rotation ω inférieure à quelques dizaines de tours par minute, par exemple inférieure à 120 tr/m (2Hz) ;
- un régime de fonctionnement à moyenne vitesse s'établit pour une vitesse de rotation ω comprise entre quelques dizaines de tours par minute et quelques milliers de tours par minute, par exemple entre 100 ou 120 tours/mn d'une part et 5000 ou 10000 tr/mn d'autre part;
- un régime de fonctionnement à haute vitesse s'établit pour une vitesse de rotation ω supérieure à quelques milliers de tours par minute, par exemple supérieure à 5000 tr/mn ou encore à 10000 tr/mn.

De manière plus détaillée, dans le mode de fonctionnement à basse vitesse (par exemple ω <120 tr/min), l'aimant central 6 est soumis à un couple magnétique induit par l'aimant entraîneur 2 en rotation (*τ_{mag}*) ainsi que par un second couple magnétique lié aux circuits ferromagnétiques 8, 8' (*τ_{fer}*). La présence de ces circuits ferromagnétiques induit des positions d'équilibre de l'aimant 6 correspondant à des puits d'énergie.

Lorsque l'aimant entraîneur 2 commence à tourner: *τ_{mag}* < *τ_{fer_seuil}, τ_{fer_seuil}*
- tant que étant le couple nécessaire pour passer la barrière d'énergie du puit, l'aimant central 6 reste bloqué sur sa 1^{ère} position d'équilibre, par exemple celle illustrée en figure 2; l'énergie liée au couple *τ_{mag}* est stockée sous forme magnétique ;
- lorsque*^{τ}_{mag}* ^{>} *^{τ}_{fer_seuil}* , le dispositif de récupération d'énergie se déclenche et l'énergie stockée sous forme magnétique est libérée sous la forme d'oscillations de l'aimant central autour de sa 2^{éme} position d'équilibre. Ces oscillations mécaniques de l'aimant central sont converties en énergie électrique par la bobine 10, qui convertit la variation de flux magnétique en force électromotrice (*e* = *dφ*/*dt*). Dans le cas des basses vitesses, on a donc un phénomène d'élévation de la fréquence (« *frequency-up conversion* »), qui permet de récupérer une énergie de manière efficace ; ce phénomène d'élévation de fréquence est dû d'une part à la fréquence plus élevée des oscillations autour de chaque position d'équilibre, par rapport à la rotation de l'aimant entraîneur 2, et d'autre part aux temps caractéristiques assez différents en jeu (d'une part le temps court du passage de l'aimant 6 d'une position d'équilibre à une autre et d'autre part le temps, qui est plus long, de la rotation de l'aimant 2);
- l'aimant entraîneur 2 poursuit son mouvement de rotation, et on a de nouveau l'inégalité : *τ_{mag}* < *τ_{fer_seuil}*; l'aimant central 6 reste donc bloqué sur sa 2^{ème} position d'équilibre ;
- lorsque, de nouveau, *τ_{mag}* > *τ_{fer_seuil},* l'aimant 6 quitte sa 2^{nde} position d'équilibre : le dispositif de récupération d'énergie se déclenche encore et retourne à sa 1^{ère} position d'équilibre (celle illustrée en figure 2), et l'énergie stockée sous forme magnétique est de nouveau libérée sous la forme d'oscillations mécaniques autour de cette 1^{ère} position d'équilibre et converties en puissance électrique par la bobine 10, avec élévation de la fréquence comme déjà expliqué ci-dessus.

Ce cycle peut se répéter avec la rotation du dispositif 4. Comme on le comprend des explications ci-dessus, le comportement du système, avec ses 2 positions d'équilibre et le déclenchement du mouvement avec libération d'une énergie, d'abord stockée sous forme magnétique, sous forme d'oscillations mécaniques autour des positions d'équilibre, permet de récupérer de l'énergie à très faibles vitesses de rotations de l'aimant entraîneur 2.

A moyennes vitesses (par exemple 120 tr/min < *ω* < 10000 tr/min), l'aimant central 6 n'a pas le temps d'entrer en oscillations autour de chacune de ses positions d'équilibre. Il est entraîné en rotation à la même vitesse ou fréquence que l'aimant entraîneur 2, l'ensemble formant un engrenage magnétique. Dans ce cas, la fréquence d'actionnement de l'aimant entraîneur 2 est suffisante pour que le mouvement de rotation de l'aimant central 6 soit directement converti en puissance électrique par la bobine 10.

A hautes vitesses (par exemple *ω* > 10000 tr/min), l'aimant central 6 « décroche » et reste bloqué : il ne tourne plus. Cependant, le champ magnétique haute fréquence induit par l'aimant entraîneur 2 est collecté directement par le circuit ferromagnétique 8 et converti en puissance électrique par la bobine 10. Dans ce cas les variations de flux dans la bobine 10 sont plus faibles que si elles étaient dues à une rotation de l'aimant 6 (car il y a 1 distance entre l'aimant entraîneur 2 et la bobine 10) ; ceci est compensé par une plus haute fréquence de variation de flux ce qui permet d'extraire une énergie exploitable. Ainsi, le système de récupération d'énergie selon l'invention est capable de générer de la puissance quelle que soit la vitesse de rotation de l'aimant entraîneur 2, à très faibles, comme à fortes vitesses de rotation.

En pratique, en fonction des applications, on peut n'utiliser que 2 gammes de vitesse, par exemple soit une rotation à basse vitesse puis à vitesse moyenne soit une rotation à vitesse moyenne puis à haute vitesse.

Par exemple, pour un dispositif ou un procédé selon l'invention :
- dans une 1^{re} gamme de vitesses ou de fréquences des premiers moyens magnétiques, dites basses vitesses ou basses fréquences, le couplage des moyens d'entraînement et de l'aimant principal entraîne la rotation de ce dernier à partir d'au moins une position d'équilibre, les oscillations de celui-ci autour de ladite au moins une position d'équilibre résultant en la création d'une énergie électrique ;
- et, dans une 2^{ème} gamme de vitesses ou de fréquences des premiers moyens magnétiques, dites vitesses moyennes ou fréquences moyennes, le couplage des moyens d'entraînement et de l'aimant principal entraîne la rotation de ce dernier, sans oscillations, cette rotation ayant pour conséquence la création de l'énergie électrique. Eventuellement, dans une 3^{ème} gamme de vitesses ou de fréquences des premiers moyens magnétiques, dites vitesses supérieures ou fréquences supérieures, l'aimant principal ne tourne plus lorsque les moyens d'entraînement sont mis en mouvement, ces moyens d'entraînement interagissant directement avec les deuxièmes moyens magnétiques, les variations de champ induite dans ces derniers étant converties en puissance électrique par la bobine conductrice.

Selon un exemple de réalisation d'un dispositif tel que celui des figures 1 et 2, on peut avoir les dimensions et paramètres suivants :
- aimant central 6 en NdFeB, de dimensions 8.2 mm (diamètre) × 2.1 mm ;
- bobine 10 en cuivre, ayant 1000 tours et 1mm d'épaisseur ;
- circuit ferromagnétique 8 en Fer-Silicium, de 2mm d'épaisseur ;
- aimant entraîneur 2 de 1cm d'épaisseur et 3cm de diamètre ; il est situé à quelques centimètres du générateur (par exemple la distance entre l'aimant entraîneur 2 et l'aimant central 6 est comprise entre 1 cm et 4 cm).

Les dimensions ci-dessus sont données à titre purement indicatif. On peut envisager un système ayant des dimensions différentes, en particulier en vue de l'intégration dans un MEMS.

Dans une variante, illustrée en figure 3, le circuit ferromagnétique double 8, 8' de la figure 1 et de la figure 2 est remplacé par un circuit ferromagnétique simple 18. Le fonctionnement est similaire à celui décrit ci-dessus (on a alors encore 2 positions d'équilibre stable, chacune correspondant à un alignement de la polarisation avec les branches du circuit).

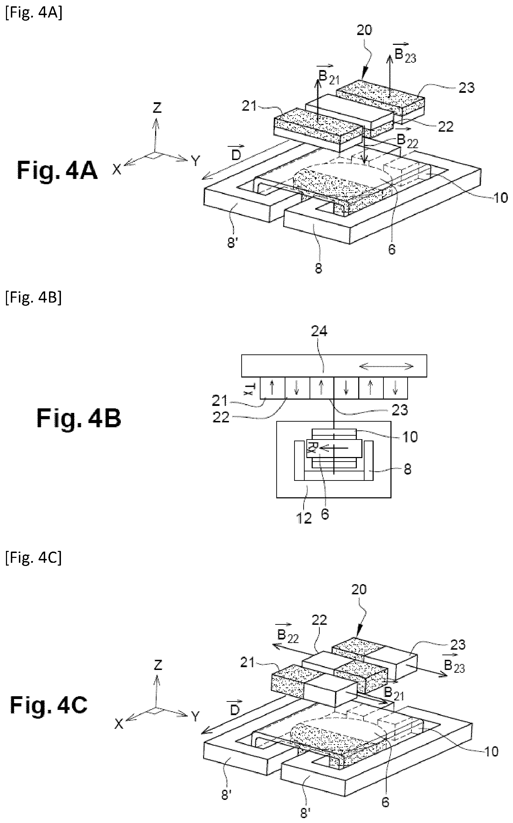

Dans un autre mode de réalisation, illustré en figure 4A, les moyens magnétiques d'entrainement 20 comportent une succession d'aimants 21, 22, 23 disposés selon une direction D, par exemple parallèle à l'axe X de la figure 4A, mais dont les polarisations, B₂₁, B₂₂, B₂₃ parallèles à l'axe Z sont orientées de manière alternée le long de l'axe X. Autrement dit, chaque aimant a une aimantation orientée selon Z mais de manière opposée à celle de son ou de ses voisin(s) ; les aimants sont maintenus par des moyens de maintien (non représentés sur la figure), par exemple par une glissière ou sur une base, qui peuvent être entraînés en translation, par exemple selon la direction D parallèle à l'axe X. En variante, les moyens magnétiques d'entrainement 20 comportent un seul aimant 21 ou 22 dont la polarisation B₂₁ ou B₂₂, est parallèle à l'axe Z. Dans ce mode de réalisation, l'aimant entraîneur rotatif de la figure 2 est donc remplacé :
- par un aimant 21 ou 22 dont la polarisation B₂₁ ou B₂₂, est parallèle à l'axe Z ;
- ou par la succession d'aimants 21 - 23 à aimantations B₂₁, B₂₂, B₂₃ parallèles à l'axe Z mais orientées de manière alternée.

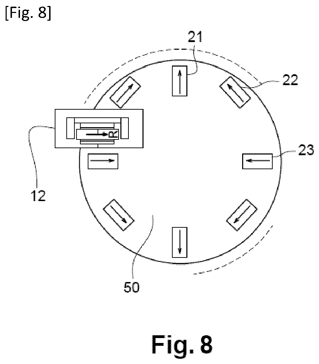

Le mouvement d'entraînement peut être généré par exemple par un axe motorisé ou une porte coulissante (non représenté(e) sur la figure), en translation suivant la direction D parallèle au plan XY, par exemple selon un mouvement de va-et-vient, et perpendiculaire aux aimantations B₂₁, B₂₂, B₂₃. En variante, représentée en figure 8, les aimants 21-23 peuvent être accrochés sur le pourtour d'un arbre tournant 50, similaire à un aimant entraîneur multipolaire. Dans ce cas, chaque aimant, lorsqu'il est au plus proche de l'élément central 6, est disposé parallèlement à ce dernier avant d'en être éloigné par le mouvement de rotation. On a également représenté en figure 8 le récupérateur d'énergie 12 placé en face du rotor. Dans cette figure 8, les aimants sont disposés en bout d'arbre ou de cylindre ; en variante, les aimants peuvent être situés à une certaine position le long de l'arbre ou du cylindre, c'est-à-dire sur la surface extérieure de l'arbre ou du cylindre. Dans ce cas, les aimants sont disposés sur une surface courbe qui fait le tour de l'arbre ou du cylindre, c'est-à-dire à l'extérieur du périmètre de l'arbre ou de cylindre.

La figure 4B représente la réalisation de la figure 4A en vue de côté, les aimants 21-23... étant fixés à une base 24 qui se déplace en translation selon un mouvement de va et vient.

En variante, les aimants entraîneurs 21-23 sont alternativement polarisés :
- selon une direction dans un plan parallèle au plan XY, mais perpendiculairement à la direction D de déplacement des aimants (voir la figure 4C);
- ou encore selon une direction dans un plan parallèle au plan XY et parallèlement à la direction D de déplacement des aimants (cas non représenté sur les figures) ;
- ou encore selon une autre direction, par exemple en diagonale par rapport aux 2 directions précédentes.

Dans ces différents cas, le circuit magnétique 8, 8' est de préférence orienté selon la direction de la polarisation des aimants 21-23 pour collecter une variation d'induction directement induite par les aimants entraîneurs à haute vitesse. Dans le cas du mouvement de translation, on a encore les trois régimes de vitesses qui ont été exposés ci-dessus.

Dans les réalisations décrites ci-dessus en lien avec la figure 4A, la figure 4B et la figure 4C, d'autres mouvements des moyens magnétiques d'entrainement 20 sont possibles (dans les trois directions X, Y, Z) en adaptant le système de récupération d'énergie en conséquence.

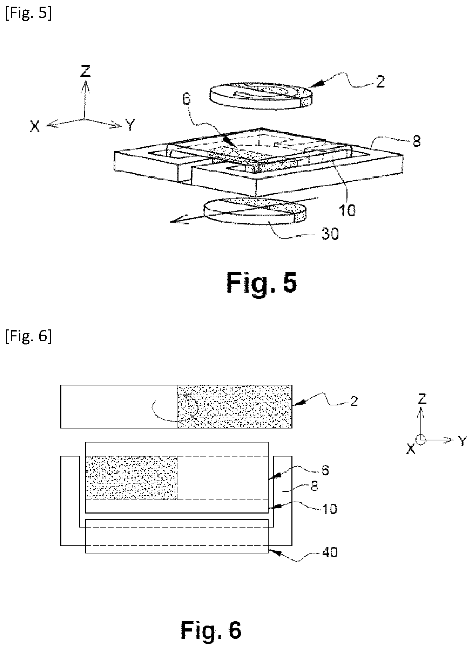

Dans les réalisations décrites ci-dessus, les moyens magnétiques d'entraînement et l'élément central sont disposés dans des plans parallèles, situés à une certaine distance l'un de l'autre. En variante, non représentée sur les figures, qu'il s'agisse du mode de réalisation de la figure 2, de la figure 3 ou de la figure 4A à la figure 4C, l'aimant 2 des configurations en rotation ou les aimants 21-23 peut/peuvent être situé(s) dans le même plan que l'aimant central 6 et être entraînés en rotation ou en translation dans ce plan. Un autre mode de réalisation est illustré en figure 5 : un aimant 30 est placé sous le générateur pour ajuster le point de déclenchement ou de basculement du système. Il a une aimantation orientée dans un plan parallèle au plan XY; il peut avoir un angle spécifique dans ce plan: en fonction de son orientation dans ce plan, l'aimant 30 va plus ou moins interagir avec l'aimant 6 et faire varier le déclenchement du basculement de celui-ci, sous l'action de l'élément entraîneur 2, d'une position stable à un autre. Cela est également applicable au cas du mouvement linéaire de la figure 4A à la figure 4C. Cet aimant 30 peut être beaucoup plus petit que l'aimant 6, et/ou situé sur le côté du dispositif. Un réglage peut se faire en le tournant et/ou en le translatant.

D'une manière générale, quel que soit le mode de réalisation de l'invention, l'interaction de l'aimant entraîné 6 avec le circuit magnétique 8 agit comme une liaison élastique ou un ressort. La caractéristique de cette liaison peut être maîtrisée par le dimensionnement des parties du système ; alternativement à ce dimensionnement, ou en combinaison avec celui-ci, il est possible de rajouter un élément « ressort » supplémentaire, par exemple, comme cela vient d'être évoqué, l'aimant supplémentaire 30 de réglage, pour atteindre la caractéristique souhaitée. Ceci permet de bien positionner le point d'équilibre des forces, en particulier l'angle de déclenchement, ainsi que la fréquence d'oscillation, notamment pour le régime à basse vitesse. En variante, l'aimant 30 peut être situé dans le même plan que l'aimant 6.

Un tel aimant supplémentaire 30 peut être utilisé dans tous les modes de réalisation décrits ci-dessus.

Selon encore un autre mode de réalisation, illustré de manière schématique en figure 6, on ajoute une bobine 40 autour du circuit magnétique 8, 8'. Cette bobine 40 peut-être la seule présente, sans la bobine 10.

Comme expliqué ci-dessus :
- à basse ou moyenne vitesse, l'aimant 6 oscille ou tourne avec l'aimant entraîneur 2, dans ce cas, la bobine 10 et/ou la bobine 40 récupère de l'énergie sur la rotation de l'aimant entraîné ;
- à haute vitesse, il n'y a plus de mouvement de l'aimant 6, mais l'aimant entraîneur 2 induit une variation de flux magnétique directement dans le circuit magnétique 8, 8', variation qui est transformée en énergie électrique via la bobine 40.

La bobine 10 et/ou la bobine 40 peuvent être connectées en série selon une polarité qui permet d'obtenir un cumul des tensions.

Selon une réalisation, seule la bobine 40 est présente, même si c'est un peu moins efficace en basse vitesse (du fait de pertes magnétiques sur les matériaux ferromagnétiques et de ce que certaines lignes de champ partent dans l'air).

Là encore, ce mode de réalisation peut être combiné avec tous les modes de réalisation décrits ci-dessus.

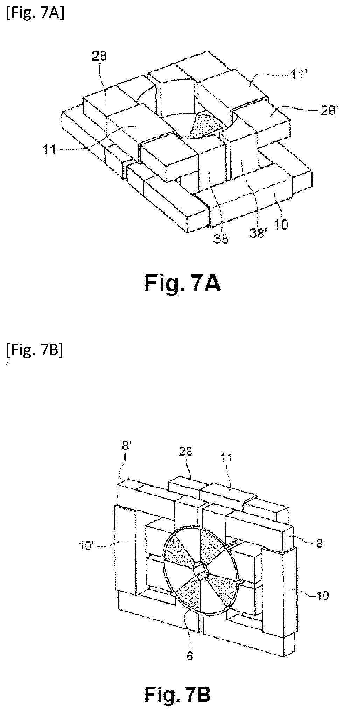

Encore un autre mode de réalisation est illustré en figure 7A et en figure 7B, dans lequel l'aimant entraîneur 2 et/ou l'aimant central 6 ne sont plus bipolaires mais multipolaires (ou n-polaire, avec n pair et n >2 ; à noter que, dans cette réalisation, l'aimant entraîneur 2 et l'aimant central 6 n'ont pas nécessairement le même nombre de pôles). Ces figures représentent le cas d'un aimant octopolaire : cette configuration permet d'exploiter 8 variations de flux lors d'un tour de l'aimant entraîneur (contre 2 variations pour la structure de la figure 2) ; sur un tour de l'aimant 6, il y a 8 positions d'équilibre. Ceci permet d'exploiter au mieux toute la rotation de l'aimant central, notamment lors des très faibles vitesses.

Une partie du circuit ferromagnétique peut alors être disposée hors du plan principal (dans lequel l'aimant 6 est en rotation), par des montants 38, 38' qui permettent de définir d'autres branches 28, 28' du circuit qui coopèrent avec des polarités additionnelles de l'aimant central 6. Chacune de ces branches est associée à une position d'équilibre de ce dernier. Notons qu'un aimant bipolaire aurait aussi 8 positions d'équilibre grâce aux branches ; 1 aimant octopolaire, avec 1 seul de ces circuits ferromagnétiques, aurait aussi 8 positions d'équilibre par tour.

Une bobine 10, 10', 11, 11' peut être placée autour de chaque branche du circuit ferromagnétique. On peut avoir un nombre différent de bobines, autre qu'une bobine par branche du circuit. Ces bobines permettent, là encore, de détecter une variation du flux magnétique et de transformer cette variation en énergie électrique, que le mouvement de rotation de l'aimant 6 soit entraîné par une rotation ou une translation. Cette configuration permet de générer de l'énergie à chaque 1/8^{e} de tour de l'aimant entraîneur, là où la configuration de, par exemple, la figure 1, demande un demi-tour de l'entrée de l'aimant entraîneur.

Dans tous les modes de réalisation de l'invention, l'énergie électrique récupérée dans la bobine 10 et/ou la bobine 40 peut être stockée, par exemple dans des moyens de stockage tels qu'une ou plusieurs batterie(s) ou un ou plusieurs condensateur(s) ou un ou plusieurs super condensateur(s) et/ou utilisée pour alimenter tout système électrique, par exemple pour transmettre une information à distance à l'aide d'un microcontrôleur et d'une puce RF et/ou pour l'une des nombreuses applications de l'invention, par exemple:
- la réalisation d'un interrupteur-variateur, ou d'un détecteur d'ouverture/fermeture d'ouvrants (portes ou fenêtres) ; de manière générale l'invention peut s'appliquer à toutes les applications domotiques ;
- l'alimentation de capteurs autonomes pour des arbres tournants ou bien codeur magnétique autonome ;
- la réalisation d'un capteur de position pour les machines ou robots industriels, ou pour les machines agricoles...
- la réalisation d'un capteur de présence, par exemple pour la détection de présence de colis ou de toute autre pièce : il s'agit, dans cette application, d'un fonctionnement par gravité dans lequel l'objet va être posé sur une surface intégrant l'invention. L'objet appuie sur la surface qui déplace un aimant entraîneur en translation.

L'invention a été décrite avec des moyens magnétiques qui sont mis en mouvement par rapport à un ensemble qui forme des moyens de récupération d'énergie. En variante, les premiers moyens magnétiques peuvent être fixes et les moyens de récupération peuvent être liés à un élément mobile.

## Revendications

1. Dispositif de récupération d'énergie comportant :
a) - des premiers moyens magnétiques (2, 20), ou moyens d'entrainement, aptes à être mis en mouvement selon un mouvement de rotation ou de translation ;
b) - un aimant principal (6), apte à être mis en rotation autour d'un axe (ZZ') par les premiers moyens magnétiques (2, 20);
c) - des deuxièmes moyens magnétiques (8, 8'), disposés de manière fixe par rapport à l'aimant principal (6), pour déterminer une ou plusieurs position(s) d'équilibre de ce dernier;
d) - au moins une bobine conductrice (10, 40) pour transformer une variation d'orientation de l'aimant principal (6) en énergie électrique, lorsque :
- dans une 1^{re} gamme de vitesses ou de fréquences des premiers moyens magnétiques, dites basses vitesses ou basses fréquences, le couplage des moyens d'entraînement et de l'aimant principal entraîne la rotation de ce dernier à partir d'au moins une position d'équilibre, les oscillations de celui-ci autour de ladite au moins une position d'équilibre résultant en la création d'une énergie électrique ;
- et, dans une 2^{ème} gamme de vitesses ou de fréquences des premiers moyens magnétiques, dites vitesses moyennes ou fréquences moyennes, le couplage des moyens d'entraînement et de l'aimant principal entraîne la rotation de ce dernier, sans oscillations, cette rotation ayant pour conséquence la création de l'énergie électrique. 2.

2. Dispositif selon la revendication 1, les premiers moyens magnétiques (2, 20) d'entrainement étant mobiles en rotation autour de l'axe (ZZ') de rotation de l'aimant principal.

3. Dispositif selon la revendication 1, les premiers moyens magnétiques (2, 20) d'entrainement étant mobiles en translation au moins en partie dans un plan perpendiculaire à l'axe (ZZ') de rotation de l'aimant principal (6) et/ou les premiers moyens magnétiques (2, 20) d'entrainement étant polarisés selon l'axe (ZZ') et étant mobiles en translation suivant (ZZ').

4. Dispositif selon la revendication 3, les premiers moyens magnétiques (2, 20) d'entrainement comportant une pluralité d'aimants (21, 22, 23) disposés de manière linéaire avec des polarités successivement opposées.

5. Dispositif selon la revendication 1, les premiers moyens magnétiques (2, 20) d'entrainement étant mobiles en rotation ou en translation au moins en partie dans un plan contenant l'aimant principal (6).

6. Dispositif selon l'une des revendications 1 à 4, les deuxièmes moyens magnétiques (8, 8', 28, 28') disposés de manière fixe par rapport à l'aimant principal (6), comportant au moins un circuit ferromagnétique, ladite ou lesdites position(s) d'équilibre étant définie(s) lorsque l'aimant principal (6) ferme ce circuit ferromagnétique.

7. Dispositif selon la revendication 6, comportant au moins 2 circuits ferromagnétiques (8, 8', 28, 28'), une position d'équilibre étant définie lorsque l'aimant principal ferme le circuit ferromagnétique.

8. Dispositif selon l'une des revendications 1 à 7, au moins une bobine conductrice (10) étant enroulée autour de l'aimant principal (6) et/ou au moins une bobine conductrice (40) étant enroulée autour d'au moins une partie (8, 8', 28, 28') du circuit magnétique.

9. Dispositif selon l'une des revendications 1 à 8, les moyens magnétiques (8, 8') pour fixer une ou plusieurs position(s) d'équilibre de l'aimant principal (6) comportant en outre au moins un aimant (30) fixe interagissant avec l'aimant principal (6).

10. Dispositif selon l'une des revendications 1 à 9, au moins l'un parmi les moyens magnétiques (2, 20) d'entrainement et l'aimant principal (6) étant bipolaire ou n-polaire (n>2).

11. Dispositif selon l'une des revendications 1 à 10, comportant plusieurs bobines conductrices (10, 40) pour transformer une variation d'orientation de l'aimant principal (6) en énergie électrique.

12. Dispositif selon l'une des revendications 1 à 11, ladite bobine conductrice (10, 40) transformant une variation d'orientation de l'aimant principal (6) en énergie électrique, lorsque, dans une 3^{ème} gamme de vitesses ou de fréquences des premiers moyens magnétiques, dites vitesses supérieures ou fréquences supérieures, l'aimant principal ne tourne plus lorsque les moyens d'entraînement sont mis en mouvement, ces moyens d'entraînement interagissant directement avec les deuxièmes moyens magnétiques, les variations de champ induite dans ces derniers étant converties en puissance électrique par la bobine conductrice.

13. Procédé de récupération d'énergie comportant :
a) - une mise en mouvement de premiers moyens magnétiques (2, 20), ou moyens d'entrainement, selon un mouvement de rotation ou de translation;
b) - une mise en rotation d'un aimant principal (6) autour d'un axe (ZZ') par les premiers moyens magnétiques (2, 20), à partir d'au moins une position(s) d'équilibre de l'aimant principal (6), définie par des deuxièmes moyens magnétiques (8, 8'), disposés de manière fixe par rapport à celui-ci;
c) - la transformation d'une variation d'orientation de l'aimant principal en énergie électrique par au moins une bobine conductrice (10, 40), lorsque :
- dans une 1^{re} gamme de vitesses ou de fréquences de rotation, par exemple inférieure à 120 tr/mn, des premiers moyens magnétiques, dites basses vitesses ou basses fréquences, le couplage des moyens d'entraînement et de l'aimant principal entraîne la rotation de ce dernier à partir de ladite au moins une position d'équilibre, les oscillations de celui-ci autour de ladite au moins une position d'équilibre résultant en la création d'une énergie électrique dans ladite au moins une bobine conductrice (10, 40);
- et, dans une 2^{ème} gamme de vitesses ou de fréquences de rotation des premiers moyens magnétiques, par exemple comprise entre 120 tr/mn et 10000 tr/mn, dites vitesses moyennes ou fréquences moyennes, le couplage des moyens d'entraînement et de l'aimant principal entraîne la rotation de ce dernier, sans oscillations, cette rotation ayant pour conséquence la création de l'énergie électrique dans ladite au moins une bobine conductrice (10, 40).

14. Procédé de récupération d'énergie selon la revendication 13, comportant en outre :
- une étape de mise en mouvement de premiers moyens magnétiques (2, 20), ou moyens d'entrainement, à une troisième vitesse ou fréquence pour laquelle l'aimant principal (6) n'est pas mis en rotation ;
- la transformation de ce mouvement des premiers moyens magnétiques (2) en énergie électrique par au moins une bobine conductrice (10, 40).

15. Procédé de récupération d'énergie selon la revendication 14, les premiers moyens magnétiques étant entraînés en rotation à une vitesse supérieure à 10000 tr/mn.
